# EUROPÄISCHE PATENTSCHRIFT

(11) **EP 1 050 013 B1**
(45) Veröffentlichungstag und Bekanntmachung des Hinweises auf die Patenterteilung: **09.04.2003**
(21) Anmeldenummer: 99907262.2
(22) Anmeldetag: 20.01.1999
(51) Int. Cl.: G06K 9/00, G07C 9/00, G06K 19/077

(54) **CHIPKARTENMODUL FÜR BIOMETRISCHE SENSOREN**
CHIP CARD MODULE FOR BIOMETRIC SENSORS
MODULE DE CARTES A PUCE POUR DETECTEURS BIOMETRIQUES

(30) Priorität: 27.01.1998 DE 19803020
(43) Veröffentlichungstag der Anmeldung: 08.11.2000
(73) Patentinhaber: Infineon Technologies AG, 81669 München (DE)
(72) Erfinder: FRIES, Manfred, D-94336 Hunderdorf (DE); FISCHER, Jürgen, D-93180 Deuerling (DE); HOUDEAU, Detlef, D-84085 Langquaid (DE)
(74) Vertreter: Fischer, Volker, Dipl.-Ing.
(86) Internationale Anmeldenummer: DE9900139
(87) Internationale Veröffentlichungsnummer: WO99038112

(56) Entgegenhaltungen:
- EP-A- 0 343 030
- EP-A- 0 789 334
- WO-A-82/03286
- FR-A- 2 746 201
- US-A- 4 253 086
- US-A- 5 208 450

## Beschreibung

Die Erfindung betrifft ein Chipkartenmodul für biometrische Sensoren, die in Chipkarten eingesetzt werden.

In Bereichen, wo es auf die eindeutige Identifikation von Personen ankommt, werden vermehrt Sensoren eingesetzt, die mit Hilfe biometrischer Verfahren arbeiten und individuelle biologische Merkmale einer Person, beispielsweise einen Fingerabdruck, erkennen können. Fingerabdrucksensoren können beispielsweise zur Überprüfung der Zugangsberechtigung einer Person in Sicherheitsbereichen von Banken, Forschungslabors, militärischen Einrichtungen etc. verwendet werden, wobei in Abhängigkeit des Überprüfungsergebnisses der Zugang zu Räumen, Computern etc. freigegeben wird oder nicht.

Es ist bekannt, als Fingerabdrucksensoren Sensorchips zu verwenden, welche an Geräten oder Wänden derart angeordnet sind, daß ein Finger aufgelegt werden kann. Weiterhin sind Chipkarten in der Form von Eintrittsberechtigungskarten oder Bankautomatenkarten bekannt, welche in Verbindung mit einer einzugebenden Geheimnummer eine Tür öffnen bzw. den Zugriff auf ein Bankkonto erlaubt. Derartige Chipkarten arbeiten jedoch nicht mit biometrischen Sensoren und erfüllen nicht die höchsten Sicherheitsanforderungen gegen unberechtigte Verwendung.

Die Verwendung eines Fingerabdrucksensors in einem kartenförmigen Körper wird in der EP-A-0 789 334 vorgeschlagen.

Der Erfindung liegt daher die Aufgabe zugrunde, ein Chipkartenmodul für biometrische Sensoren zu schaffen, welche für den Einbau in Chipkarten verwendbar ist.

Diese Aufgabe wird erfindungsgemäß durch die Merkmale des Anspruchs 1 gelöst. Vorteilhafte Ausführungsformen der Erfindung sind in den weiteren Ansprüchen beschrieben.

Bei dem erfindungsgemäßen Chipkartenmodul ist der Sensorchip auf einem platten- oder folienartigen Träger befestigt, der elektrisch leitende Bereiche aufweist, die einerseits mit dem Sensorchip und andererseits mit elektrischen Anschlüssen der Chipkarte verbunden sind. Der Träger weist im Bereich des Sensorchips mindestens ein durchgehendes Fenster auf. Weiterhin ist der Sensorchip derart am Träger befestigt, daß die aktive Struktur des Sensorchips zum Träger hin gerichtet ist und im Bereich des Fensters liegt, so daß sie durch das Fenster des Trägers hindurch zugänglich ist.

Das erfindungsgemäße Chipkartenmodul ermöglicht es, biometrische Sensorchips in Chipkarten einzubauen. Hierdurch kann die Sicherheit konventioneller Chipkarten nochmals erhöht werden. Die Chipkarte wird üblicherweise so weit in ein Auslesegerät eingesteckt, daß das Fenster mit dem Sensorchip noch frei zugänglich ist. Vom Auslesegerät erhält das Chipkartenmodul dann die zum Erfassen des Fingerabdrucks erforderliche Energie, wobei die Daten vom Sensorchip ggf. zu einem ebenfalls in der Chipkarte integrierten Halbleiter-Chip weitergegeben werden, der als Auswerteeinrichtung dient. Derartige Chipkarten können sowohl als kontaktlose als auch als kontaktbehaftete Chipkarten ausgeführt werden. Bei den kontaktlosen Chipkarten werden die Energie und die Daten über induktive/kapazitive Kopplung zugeführt.

Besonders vorteilhaft ist, daß das erfindungsgemäße Chipkartenmodul in gleicher Weise, wie dies in der Chipkartentechnik üblich ist, am Band fertig montiert und getestet werden kann und erst im Rahmen eines abschließenden Arbeitsgangs in die vorbereitete Chipkarte eingesetzt werden kann. Zum Einsetzen in die Chipkarte kann die übliche Montagetechnik verwendet werden, wie sie bei sogenannten Kombichipmodulen, d.h. bei gleichzeitig kontaktlosen als auch Kontaktbehafteten Chipmodulen, verwendet wird. Die elektrische Funktion des Sensorchips bzw. des gesamten Chipmoduls kann schon vor dem Einsetzen in die Chipkarte getestet werden. Die Integration im Herstellprozeß ist dementsprechend leicht und kostengünstig.

Gemäß einer vorteilhaften Ausführungsform ist der Sensorchip in mehrere Einzelsegmente unterteilt, die jeweils im Bereich eines eigenen Fensters des Trägers liegen. Die Aufteilung des Sensorchips in mehrere Einzelsegmente hat den Vorteil, daß die Bruchgefahr des relativ großen und dadurch bruchempfindlichen Sensorchips, der im Falle eines Fingerabdrucksensors erforderlich ist, bedeutend verringert wird.

Vorteilhafterweise ist das Chipkartenmodul in den Randbereichen des Trägers mit einem flexiblen Kleber mit dem Chipkartenmarterial verklebt. Hierdurch kann der schädliche Einfluß von Biegespannungen von der Chipkarte auf das Chipkartenmodul verringert werden.

Gemäß einer zweckmäßigen Ausführungsform der Erfindung bestehen die elektrisch leitenden Bereiche des Chipkartenmoduls zwischen den elektrischen Anschlüssen der Chipkarte und dem Sensorchip zumindest zum Teil aus mäanderförmig geführten Leiterbahnen. Derartige mäanderförmig geführte Leiterbahnen bieten eine entsprechende Flexibilität, um Biegespannungen bei großflächigen Sensorchips aufzunehmen, ohne daß die elektrischen Verbindungen beschädigt werden.

Die Erfindung wird nachfolgend anhand der Zeichnungen beispielshaft näher erläutert. In diesen zeigen:
- Figur 1 :: einen Querschnitt des erfindungsgemäßen Chipkartenmoduls, das in eine entsprechende Vertiefung in einer Chipkarte eingesetzt ist,
- Figur 2 :: eine schematische perspektivische Ansicht des Chipkartenmoduls schräg von oben,
- Figur 3 :: eine Draufsicht auf eine mäanderförmig geführte Leiterbahn, die sich vom Außenanschluß des Chipkartenmoduls zum Sensorchip erstreckt, und
- Figur 4 :: eine schematische Draufsicht auf ein Chipkartenmodul mit einem in vier Einzelsegmente unterteilten Sensorchip und einem vier entsprechende Fenster aufweisenden Träger.

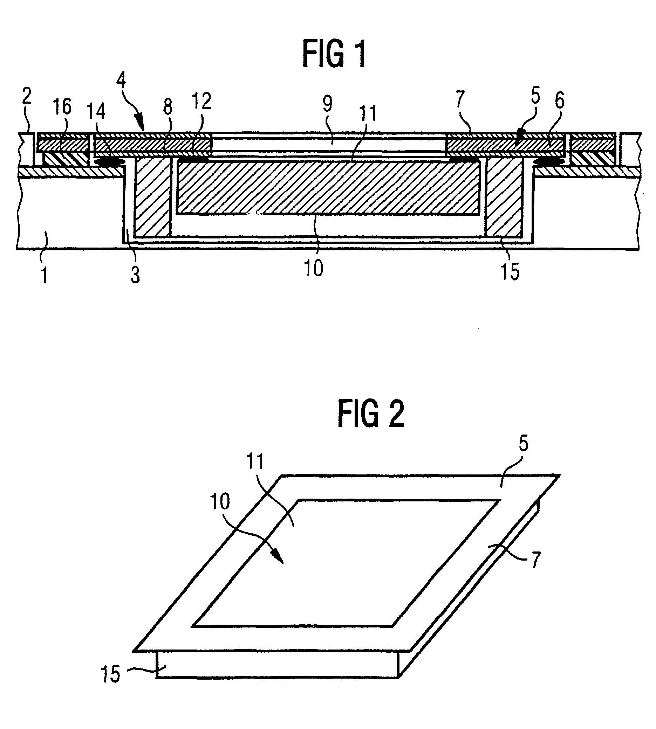

Aus Figur 1 ist ein Ausschnitt einer Chipkarte 1 mit einer von ihrer Oberfläche 2 her eingebrachten Vertiefung 3 ersichtlich, in die ein Chipkartenmodul 4 eingesetzt ist.

Das Chipkartenmodul 4 weist einen platten- oder folienartigen Träger 5 auf, der aus einer Epoxyschicht 6, einer oberen leitenden Schicht 7 und unteren leitenden Bereichen 8 besteht. In der Mitte des Trägers 5 ist eine durchgehende Aussparung vorgesehen, welche ein rechteckiges Fenster 9 bildet.

Auf der Unterseite des Trägers 5 ist ein Sensorchip 10 angeordnet, welches eine obere aktive Fläche 11 aufweist. Diese aktive Fläche 11 ist als Sensorfläche ausgebildet, welche in der Lage ist, den Fingerabdruck eines auf die aktive Fläche 11 aufgelegten Fingers zu erkennen und die Struktur des Fingerabdrucks in Form von elektrischen Impulsen an eine nicht näher dargestellte Auswerteeinheit weiterzugeben. Der Sensorchip 10 ist etwas größer als das Fenster 9 und unmittelbar unterhalb des Fensters 9 angeordnet, so daß die aktive Fläche 11 zum Fenster 9 hin gerichtet ist und der Sensorchip 10 an den Randbereichen des Trägers 5 neben dem Fenster 9 befestigt werden kann. Die elektrischen Anschlüsse des Sensorchips 10 sind über Chipkontaktierungsstellen 12 mit zugeordneten leitenden Bereichen 8 des Trägers 5 verbunden, wobei sich diese Chipkontaktierungsstellen 12 im Randbereich neben dem Fenster 9 befinden. Die elektrische Verbindung zwischen Chipkartenmodul 4 und Leiterbahnen 13 der Chipkarte 1 erfolgt über äußere Anschlüsse 14, welche sich zwischen den Leiterbahnen 13 der Chipkarte 1 und den leitenden Bereichen 8 des Chipkartenmoduls 4 befinden.

Zwischen den äußeren Anschlüssen 14 und den Chipkontaktierungsstellen 12 befindet sich weiterhin ein Versteifungselement 15 in der Form eines steifen Ringes, der von unten her auf den Träger 5 aufgesetzt ist.

Das gesamte Chipkartenmodul 4 wird mittels eines flexiblen Klebers 16 in einem erhöhten Randbereich der Vertiefung 3 festgeklebt. Dieser flexible Kleber 16 weist eine ausreichende Flexibilität und Dicke auf, so daß er in der Lage ist, bei einer Verbiegung der Chipkarte 1 entsprechend nachzugeben. Hierbei wird vermieden, daß das relativ steife Chipkartenmodul 4 und insbesondere der Sensorchip 10 beschädigt wird.

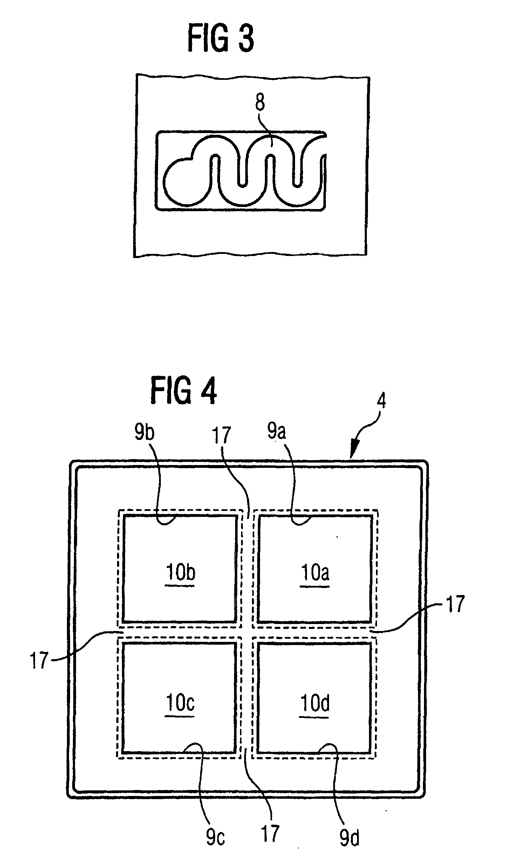

Um zu verhindern, daß entsprechende Biegespannungen von den äußeren Anschlüssen 14 über die leitenden Bereiche 8 auf die Chipkontaktierungsstellen 12 und von dort auf den Sensorchip 10 übertragen werden, ist es möglich, die leitenden Bereiche 8 als mäanderförmig verlaufende Leiterbahnen auszubilden, von denen ein Beispiel als Draufsicht in Figur 3 dargestellt ist.

Figur 2 zeigt in schematischer, perspektivischer Ansicht das Chipkartenmodul 4 von Figur 1. Die obere leitende Schicht 7 bildet einen um das Fenster 9 herum umlaufenden Masserahmen. Bei diesem Ausführungsbeispiel ist im Träger 4 ein einziges Fenster 9 vorgesehen, das ausreichend groß ist, um einen gesamten Fingerabdruck erfassen zu können.

In Figur 4 ist eine schematische Draufsicht auf eine alternative Ausführungsform der Erfindung gezeigt, bei welcher der Sensorchip 10 in vier Segmente 10a, 10b, 10c, 10d unterteilt ist. Diese Segmente 10a, 10b, 10c, 10d sind im gezeigten Ausführungsbeispiel quadratisch und gleich groß, wobei ihre Außenkonturen gepunktet eingezeichnet sind.

Bei Verwendung eines derartigen viergeteilten Sensorchips 10 ist auch das Fenster 9 des Trägers 5 viergeteilt, d.h. das Fenster 9 weist vier Einzelfenster 9a, 9b, 9c, 9d auf, die ebenfalls quadratisch und derart angeordnet sind, daß sie insgesamt ein großes Quadrat ergeben. Die Einzelfenster 9a, 9b, 9c, 9d sind durch Stege 17 des Trägers 5 voneinander getrennt, die zusammen ein zentrales Kreuz bilden. Die Stege 17 dienen zur Befestigung der Segmente 10a, 10b, 10c, 10d des Sensorchips 10. Durch die Segmentierung des Sensorchips 10 ist eine gewisse Flexibilität des Sensorchips 10 gewährleistet, so daß die Bruchgefahr bei einer Verbiegung der Chipkarte 1 verringert wird.

Wird ein Finger auf die Fenstersegmente 9a, 9b, 9c, 9d aufgelegt, werden die Fingerabdrucklinien, welche aufgrund der Stege 17 lediglich unterbrochen erfaßt werden können, auf elektronische Weise ergänzt, so daß ein Fingerabdruck auf die gleiche Weise ausgewertet werden kann, als wenn die Stege 17 nicht vorhanden wären.

## Patentansprüche

1. Chipkartenmodul für biometrische Sensoren zum Einbau in Chipkarten, mit mindestens einem Sensorchip (10) als Sensor, einem platten- oder folienartigen Träger (5), an dem der Sensorchip (10) befestigt ist und der elektrisch leitende Bereiche (8) aufweist, die einerseits mit dem Sensorchip (10) und andererseits mit elektrischen Anschlüssen (14) der Chipkarte (1) verbunden sind, wobei der Träger (5) im Bereich des Sensorchips (10) mindestens ein durchgehendes Fenster (9) aufweist und der Sensorchip (10) derart am Träger (5) befestigt ist, daß die aktive Fläche (11) des Sensorchips (10) zum Träger (5) hin gerichtet ist und im Bereich des Fensters (9) liegt, so daß sie durch das Fenster (9) des Trägers (5) hindurch zugänglich ist.

2. Chipkartenmodul nach Anspruch 1, **dadurch gekennzeichnet, daß** der Sensorchip (10) in mehrere Einzelsegmente (10a, 10b, 10c, 10d) unterteilt ist, die jeweils im Bereich eines eigenen Fenstersegments (9a, 9b, 9c, 9d) des Trägers (5) liegen.

3. Chipkartenmodul nach Anspruch 1 oder 2, **dadurch gekennzeichnet, daß** das Chipkartenmodul in den Randbereichen des Trägers (5) mit einem flexiblen Kleber (16) mit dem Chipkartenmaterial verklebt ist.

4. Chipkartenmodul nach einem der vorhergehenden Ansprüche, **dadurch gekennzeichnet, daß** die elektrisch leitenden Bereiche (8) des Chipkartenmoduls zwischen den elektrischen Anschlüssen (14) der Chipkarte (1) und dem Sensorchip (10) zumindest zum Teil aus mäanderförmig geführten Leiterbahnen bestehen.

## Claims

1. Smart card module for biometric sensors for installation in smart cards, having at least one sensor chip (10) as a sensor, and having a board-like or foil-like support (5), which has the sensor chip (10) mounted on it and has electrically conductive regions (8) connected to the sensor chip (10), on the one hand, and to electrical connections (14) of the smart card (1), on the other hand, the support (5) having at least one through window (9) in the region of the sensor chip (10), and the sensor chip (10) being mounted on the support (5) such that the active surface (11) of the sensor chip (10) is directed towards the support (5) and is situated in the region of the window (9), so that it can be accessed through the window (9) in the support (5).

2. Smart card module according to Claim 1, **characterized in that** the sensor chip (10) is subdivided into a plurality of individual segments (10a, 10b, 10c, 10d) which are each situated in the region of a dedicated window segment (9a, 9b, 9c, 9d) of the support (5).

3. Smart card module according to Claim 1 or 2, **characterized in that** the smart card module is bonded to the smart card material in the edge regions of the support (5) by means of a flexible adhesive (16).

4. Smart card module according to one of the preceding claims, **characterized in that** at least some of the electrically conductive regions (8) of the smart card module between the electrical connections (14) of the smart card (1) and the sensor chip (10) comprise conductor tracks routed in a meander shape.

## Revendications

1. Module de cartes à puces pour des détecteurs biométriques à intégrer dans des cartes à puces, ayant au moins une puce de détection (10) en tant que détecteur, un support (5) sous forme de plaque ou de film auquel la puce de détection (10) est fixée et qui présente des zones (8) électriquement conductrices, lesquelles d'une part sont reliées à la puce de détection (10) et d'autre part à des bornes électriques (14) de la carte à puces (1), le support (5) dans la zone de la puce de détection (10) présentant au moins une fenêtre (9) traversante et la puce de détection (10) étant fixée au support (5) de telle manière que la surface active (11) de la puce de détection (10) est dirigée vers le support (5) et se trouve dans la zone de la fenêtre (9) de sorte qu'elle est accessible à travers la fenêtre (9) du support (5).

2. Module de cartes à puces selon la revendication 1 **caractérisé en ce que** la puce de détection (10) est divisée en plusieurs segments distincts (10a, 10b, 10c, 10d) qui chacun se trouve dans la zone d'un segment de fenêtre propre (9a, 9b, 9c, 9d) du support (5).

3. Module de cartes à puces selon la revendication 1 ou 2 **caractérisé en ce que** le module de cartes à puces est collé au matériau de carte à puces dans les zones de bord du support (5) avec une colle (16) flexible.

4. Module de cartes à puces selon l'une des revendications précédentes **caractérisé en ce que** les zones électriquement conductrices (8) du module de cartes à puces entre les bornes électriques (14) de la carte à puces (1) et la puce de détection (10) se composent au moins en partie de pistes conductrices disposées en méandre.
